# EUROPÄISCHE PATENTSCHRIFT

(11) **EP 0 677 948 B1**
(45) Veröffentlichungstag und Bekanntmachung des Hinweises auf die Patenterteilung: **26.08.1998**
(21) Anmeldenummer: 95111055.0
(22) Anmeldetag: 04.02.1994
(51) Int. Cl.: H04N 1/40

(54) **Anordnung zur Erzeugung von Rasterdruck hoher Qualität mit einer elektrofotografischen Druckeinrichtung**
Apparatus for producing high gravity half-tone dot images using an electrophotographic recording apparatus
Appareil pour la production d'image à point de demi-teintes de haute qualité avec un appareil d'enregistrement électrophotographique

(30) Priorität: 10.02.1993 EP 93102070
(43) Veröffentlichungstag der Anmeldung: 18.10.1995
(62) Teilanmeldung aus: 94906221.0
(73) Patentinhaber: Océ Printing Systems GmbH, 85586 Poing (DE)
(72) Erfinder: Schleusener, Martin, Dr., D-85604 Zorneding (DE); Mäss, Volkhard, D-85435 Erding (DE); Morris, Edward, Dr., D-85435 Erding (DE)
(74) Vertreter: Schaumburg, Thoenes & Thurn

(56) Entgegenhaltungen:
- DE-A- 3 534 338
- US-A- 5 124 726

## Beschreibung

Die Erfindung betrifft eine elektrofotografische Anordnung zur Erzeugung von Rasterdruck hoher Qualität, die unabhängig von den individuellen Leuchtstärken von steuerbaren Lichtquellen einer elektrofotografischen Druckeinrichtung ist. Die steuerbaren Lichtquellen belichten einen Fotoleiter.

Bei elektrofotografischen Druckeinrichtungen ist es bisher üblich, Zeichen und Halbtonbilder durch Punkteraster darzustellen, die aus einzelnen eingefärbten Punkten vorgegebener Größe bestehen. Grauabstufungen erreicht man durch eine Matrixanordnung, z.B. in Form eines Dither-Rasters oder andere Raster. Derartige Raster haben jedoch eine ungünstige Relation von Auflösung und Grauabstufen und beinhalten die Gefahr der Rasterkonturen- und der Moirébildung, was die erzielbare Druckqualität beschränkt.

Aus der US-PS 4 809 021 ist es bekannt, durch Variation der Intensität oder des Durchmessers des Laserstrahls eine Druckqualitätserhöhung dadurch zu erreichen, daß Punkte verschiedener Größe erzeugt werden.

Es ist weiterhin aus US-A-5 124 726 eine nichtmechanische Druckereinrichtung zum Erzeugen von Halbtonbildern bekannt. Die Druckereinrichtung enthält eine als optischen Kamm ausgebildete Lichtquelle in Form einer LED-Leiste mit einer Vielzahl einzelner ansteuerbarer Leuchtdioden, sowie eine mit den Leuchtdioden gekoppelte Ansteuereinrichtung zur Belichtungssteuerung.

Aufgabe der Erfindung ist es eine elektrofotografische Druckeinrichtung aufzuzeigen, die eine Anordnung zur Erzeugung von Rasterdruck hoher Qualität, die unabhängig von den individuellen Leuchtstärken von steuerbaren Lichtquellen ist, enthält.

Diese Aufgabe wird gemäß den Merkmalen des Patentanspruchs 1 gelöst. Vorteilhafte Ausführungsformen der Erfindung sindin Unteransprüchen angegeben.

Mittels der Voreinstellung der Taktgesteuerten Zähleinrichtung kann durch einen einzigen zugeführten Takt die individuelle Belichtungszeit jeder individuellen Lichtquelle gesteuert werden. Jede Lichtquelle erzeugt so eine individuelle Ladung auf dem Fotoleiter, die einem bestimmten Grauwert entspricht.

Gemäß einer besonderen Ausführungsform wird das Belichtungsniveau jeder Lichtquelle durch eine spannungsgesteuerte Stromquelle eingestellt. Dies ermöglicht beispielsweise eine Belichtungskorrektur, so daß eine nahezu gleiche Lichtleistungsabstrahlung aller Lichtquellen erreichbar ist.

Gemäß einer weiteren Weiterbildung und Ausgestaltung der Erfindung ist eine weitere Speichereinrichtung mit dem Speicher, der beispielsweise als Schieberegister eingesetzt ist, koppelbar. Die Speichereinrichtung dient zur Aufnahme von Lichtquellenabgleichinformationen zugeordneten Datenwörtern. Eine mit den spannungsgesteuerten Stromquellen und der weiteren Speichereinrichtung koppelbare spannungserzeugende Einrichtung, die in Abhängigkeit von den Datenwörtern Ansteuerspannungen für die Stromquellen generiert, setzt die individuelle Information zur Belichtungskorrektur in eine analoge Größe um.

Zur Grauwertdarstellung eines Halbtonbildes wird die Fläche eines Halbtonbildes in Makropixel eingeteilt, deren Große im Integrationsbereich des menschlichen Auges liegt. Jedes Makropixel wird wiederum in Mikropixel aufgeteilt. Die Schriftzeichenflächen werden ebenfalls in Mikropixel aufgeteilt, wobei jedes Zeichen durch einen spezifischen Mikropixelsatz realisiert wird. Zur Erzeugung der Zeichen mit Hilfe einer elektrofotografischen Druckeinrichtung wird der Fotoleiter der Druckeinrichtung gleichförmig aufgeladen und nachfolgend mit einer Pixelstruktur belichtet, die durch Tonerablagerung entwickelt wird.

Eine quasi kontinuierlich abstufbare Makropixeleinfärbung erreicht man durch Belichtung der Mikropixel mittels einer Belichtungsvorrichtung, die eine Abstufung von mehreren Helligkeits- bzw. Belichtungswerten je Mikropixel gestattet, z.B. einem LED-Zeichengenerator mit variabler Lichtenergieemission je Mikropixel oder durch einen intensitätsabhängig gesteuerten Laserstrahl. Die Belichtung der Mikropixel wird derart gesteuert, daß für jedes Makropixel eine Potentialmulde entsteht, die in der nachfolgenden Entwicklung zu einer definierten Einfärbung führt. Bei Entwicklung der belichteten Fotoleiterstellen, die bei elektrofotografischen Druckern überwiegend eingesetzt wird, werden diejenigen Flächenanteile der Potentialmuldenstruktur eingefärbt, deren Potentialwert unterhalb des Biaspotentials der Entwicklerstation liegt, wobei das Biaspotential die Einfärbungsgrenze festlegt. Das Verfahren ist dabei sowohl für die Umkehrentwicklung als auch für die Direktentwicklung geeignet.

Der integrale Grauwert einer gerasteten Fläche wird durch den Rastertonwert bestimmt, der dem Verhältnis der mit Toner bedeckten Fläche zur tonerfreien Fläche im Makropixel entspricht. Auch die Form dieser Flächenanteile hat einen Einfluß auf den Eindruck der Graufläche im menschlichen Auge. Über die Verteilung der Mikropixelbelichtung im Makropixel kann auch die im Offsetdruck übliche Rasterpunktform angenähert werden. Damit ist einerseits eine optimierte Relation von Auflösung und Grauwert-Abstufung und andererseits auch eine Anpassung an übliche Sehgewohnheiten erreichbar.

Analog zur Formung der Rasterkonturen wird die Kontur der Zeichen und Linien durch die Ausbildung einer Potentialmuldenstruktur bzw. eines Potentialreliefs und dessen Schnittebene mit dem Biaspotentialniveau der Entwicklerstation gebildet.

Bei der Ausformung der Halbtonraster, der Schriftzeichen und gekrümmter sowie schräger Linien und bei Grafik, kann die Potentialmuldenstruktur so an die speziellen Wiedergabeeigenschaften des real eingesetzten elektrofotografischen Prozesses angepaßt werden, daß dessen Schwächen zielgerichtet kompensiert werden. Hierzu gehören alle Dichteverzerrungen durch Nachbar- und Kanteneffekte, wie die ungleichmäßige Einfärbung von Linien parallel oder quer zur Entwicklungsrichtung sowie feiner und breiter Linien und Großflächen.

Durch eine asymmetrische Belichtungsenergieverteilung der Mikropixel im Makropixel kann die X-Y-Asymmetrie, die in der Belichtungsverteilung der Mikropixel bei hohen Druckgeschwindigkeiten entstehen, firmwareseitig kompensiert werden. Somit kann bei gleicher Lichtquellenemissionsflachenform, z.B. von LED's bei der Verwendung eines LED-Kammes, bei unterschiedlichen Druckgeschwindigkeiten eine gleichwertige Makropixelsymmetrie erreicht werden.

Die Reproduzierbarkeit der Rastergrauwerte sowie der Zeichenund Linienkonturen wird durch die Verwendung von Fotoleitern und Entwicklern hoher Kennlinienstabilität in Verbindung mit einer Rasterkennlinien-Regelung erreicht. Die Gesamtgradation des elektrofotografischen Prozesses ist in Analogie zur Gradation reprografischer Materialien hinreichend steil dimensioniert.

Die insbesondere die Reproduzierbarkeit des verwendeten Druckrasters und damit die Druckqualität garantierende Rasterkennlinienregelung besteht vorzugsweise aus zwei Regelkomponenten, wobei die erste Regelkomponente das elektrostatische Potentialrelief stabilisiert und die zweite Regelkomponente für die Konstanthaltung der Einfärbungskennlinie auf dem Potentialrelief sorgt.

Die Erfindung ermöglicht eine quasi analoge Darstellung von Halbtonbildern und Linien beliebiger Form. Allein die Größe der die Ladungsbereiche einfärbenden Tonerpartikel setzt hier eine Grenze. Ausführungsformen der Erfindung sind in den Zeichnungen dargestellt und werden im folgenden beispielsweise näher beschrieben. Es zeigen
Figur 1 eine schematische Darstellung einer elektrofotografischen Druckeinrichtung mit zugehöriger Ansteueranordnung,
Figur 2 ein schematisches Blockschaltbild einer Druckkopfansteuerung für einen LED-Kamm,
Figur 3 eine schematische Darstellung des Aufbaus der in der Druckkopfansteuerung der Figur 2 verwendeten IC-B,

### Grundsätzliche Überlegungen

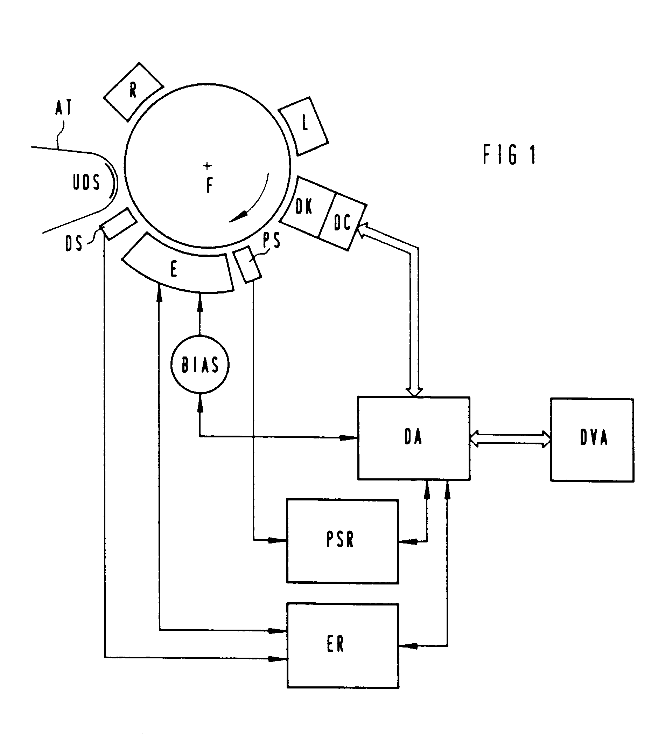

Ein in der Figur 1 schematisch dargestellter elektrofotografischer Drucker enthält eine elektromotorisch antreibbare Fotoleitertrommel F. Um die Fotoleitertrommel F gruppiert sind, die für den elektrofotografischen Prozeß erforderlichen Aggregate wie Belichtungseinrichtung DK, Entwicklerstation E, Umdruckstation UDS, Reinigungsstation R und Ladeeinrichtung L. Beim elektrofotografischen Prozeß wird die Fotoleitertrommel F mit Hilfe der Ladeeinrichtung L auf etwa 500 V gleichmäßig aufgeladen und dann mit Hilfe der Belichungseinrichtung DK bis in den Bereich von etwa 70 V entladen und so ein latentes Zeichenbild erzeugt. Dieses so erzeugte latente Zeichenbild wird dann in üblicher Weise in der Entwicklerstation E mit Hilfe eines Zweikomponentengemisches aus Tonerteilchen und ferromagnetischen Trägerteilchen eingefärbt. Die Tonerteilchen sind triboelektrisch positiv aufgeladen. Zwischen der Entwicklerwalze, die auf einem Biaspotential von 220 V liegt und den auf etwa 70 V entladenen Bereichen des latenten Zeichenbildes entsteht ein Feld, wodurch sich die Tonerteilchen auf den entladenen Bereichen anlagern. Von den nichtbelichteten Flächen mit einer Aufladespannung von etwa 500 V werden die Tonerteilchen abgestoßen. Das so erzeugte Tonerbild wird dann in üblicher Weise in der Umdruckstation UDS auf einen Aufzeichnungsträger AT übertragen und die Fotoleitertrommel F in der Reinigungsstation R von anhaftenden Resttonerteilchen befreit. Danach beginnt der elektrofotografische Prozeß erneut durch Aufladung der Fotoleitertrommel über die Ladestation L.

Als Belichtungseinrichtung DK kann jede, in ihrer auf die Fotoleitertrommel abstrahlenden Lichtenergie variable ansteuerbare Lichtquelle verwendet werden, z.B. ein Laser oder wie in diesem Fall ein LED-Kamm wie er hinsichtlich seines geometrischen Aufbaues in der EP-B1-0 275 254 beschrieben ist.

Maßgebend für den Entladevorgang auf der Fotoleitertrommeloberfläche ist die von der Belichtungseinrichtung abgegebene Lichtenergie. Somit ist es bei der Verwendung von LED's als Lichtquelle möglich, die abgegebene Lichtenergie durch Variation der Einschaltzeit oder durch den Erregerstrom oder durch eine Kombination zu steuern.

LED-Zeichengeneratoren mit einzeln ansteuerbaren LED's haben hinsichtlich der Einzel-LED's eine etwa kegelförmige Abstrahlungscharakteristik. Dies ist einerseits bedingt durch die etwa kreisförmig ausgestaltete LED-Struktur, andererseits durch eine zwischen den LED's und der Fotoleitertrommel angeordnete Fokussieroptik, die den LED-Leuchtpunkt auf der Fotoleitertrommel punktförmig abbildet. Bedingt durch diese kegelförmige Lichtintensitätsverteilung über den Leuchtpunkt ergibt sich bei der Belichtung der Fotoleitertrommel eine entsprechende kegelförmige Entladestruktur, die im folgenden als Potentialmulde bezeichnet wird. Sind mehrere LED's an der Bildung einer solchen Potentialmulde beteiligt, so ergibt sich ein Potentialrelief aus einzelnen benachbarten Endladebereichen.

### Ausführungsbeispiel

Ein Ausführungsbeispiel der Erfindung wird im folgenden anhand der Figuren 1, 2 und 3 näher beschrieben.

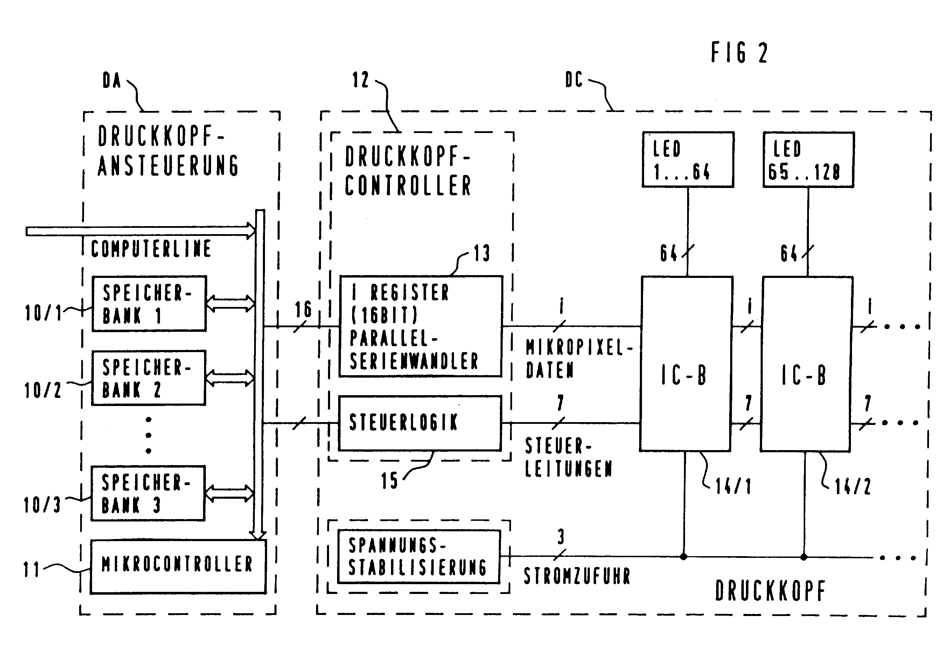

Die bereits eingangs allgemein beschriebene elektrofotografische Druckeinrichtung enthält als steuerbare Lichtquelle DK einen LED-Zeichengenerator (Druckkopf) mit einer Vielzahl von einzeln ansteuerbaren LED, wobei jeder LED ein Mikropixel MIK zugeordnet ist. Mit dem Druckkopf gekoppelt ist eine mikroprozessorgesteuerte Steueranordnung (Figur 2), die im wesentlichen aus einer Druckeransteueranordnung DA und einer Lichtquellensteuereinrichtung DC besteht. Die Lichtquellensteuereinrichtung DC (Figur 1) ist im Druckkopf selbst integriert. Eine das Potentialrelief stabilisierende Regelanordnung PSR steht mit einem dem Fotoleiter F zugeordneten Potentialsensor PS üblicher Bauart in Verbindung. Die Einrichtung ER regelt die Einfärbung des Potentialreliefs UR. Die letztgenannte Regeleinrichtung ER wiederum steht mit der Entwicklerstation E und deren Elemente wie Tonerzuführeinrichtung, Tonerfüllstandsensor und einer die Biasspannung regelnden Anordnung BIAS (z.B. einem Spannungsregler) in Verbindung. Angesteuert wird die gesamte Anordnung über eine extern oder intern im Drucker angeordnete Datenverarbeitungsanordnung DVA. Die DVA liefert Informationen über die abzugebende Belichtung H für jeden Leuchtpunkt (Mikropixel) und die Strahlungsposition auf dem Fotoleiter in Form von Datensignalen, z.B. Datenwörter.

Sämtliche Steuer- und Regelanordnungen können hardwaremäßig als separate µP-gesteuerte Anordnungen ausgebildet sein oder sie können Bestandteil einer Gerätesteuerung sein, die ansonsten in üblicher Weise aufgebaut ist und die den elektrofotografischen Druckprozeß einschließlich Aufzeichnungsträgertransport und Fixierung steuert.

Die DVA liefert die für den Druck vorgesehenen Informationen in Form von Datensignalen über eine parallele 16-Bit-Schnittstelle an die Druckeransteueranordnung DA. Die Belichtung (Lichtenergie/Fläche) für jeden Leuchtpunkt (Mikropixel) wird dabei durch Zahlenwerte (Belichtungsbytes) beschrieben. Dabei bestimmt die Breite der Belichtungsbytes i die Anzahl der möglichen Helligkeitsstufen. Für z.B. 8 Belichtungsstufen (H0 bis H7) bestehen die Belichtungsbytes aus i = 3 Bit.

Die Belichtungsbytes werden in der Druckeransteueranordnung DA, die als spezielle Leiterplatte ausgebildet ist in i-Speicherbänken 10-1 bis 10-3 zwischengespeichert. Für jedes Bit der Belichtungsbytes existiert eine Speicherbank 10-1 bis 10-3. Zur Ansteuerung des Druckkopfes werden von einem in der Druckkopfansteueranordnung angeordneten Mikrocontroller 11 nacheinander 16-Bit-Worte aus den i-Speicherbänken 10-1 bis 10-3 an die Elektronik eines in der Lichtquellensteuereinrichtung DC angeordneten Druckkopfcontrollers 12 übergeben und dort in einem 16-Bit-Register eines Parallel-Serienwandlers 13 gepuffert. Der Parallel-Serienwandler 13 setzt die i-16-Bit-Worte in 64 Belichtungsbytes der Breite i um, die dann nacheinander an IC-B-Schaltkreise 14/1 bis 14/n übergeben werden.

Jeder IC-B-Schaltkreis 14/2 bis 14/n-1 ist mit seinem Nachbar IC-B-Schaltkreis 14/1 bis 14/n verbunden, wobei jedem IC-B jeweils eine Gruppe von LED's mit einer gleichen Anzahl von LED's zugeordnet ist. Diese einzelnen LED-Gruppen LED1 bis LED64 bzw. LED65 bis LED128 usw. enthalten jeweils 64 LED, die jeweils gemeinsam auf einem Chip integriert sind. Bei einer Druckerauflösung von 300 Dots/Inch zum Bedrucken von einem Format A4 quer sind dabei etwa n = 3500 LED's erforderlich. Durch die Verkoppelung der IC-B entsteht ein n x i großes Schieberegister, wobei n die Anzahl der anzusteuernden LED's darstellt und i die Anzahl der Speicherbänke 10.

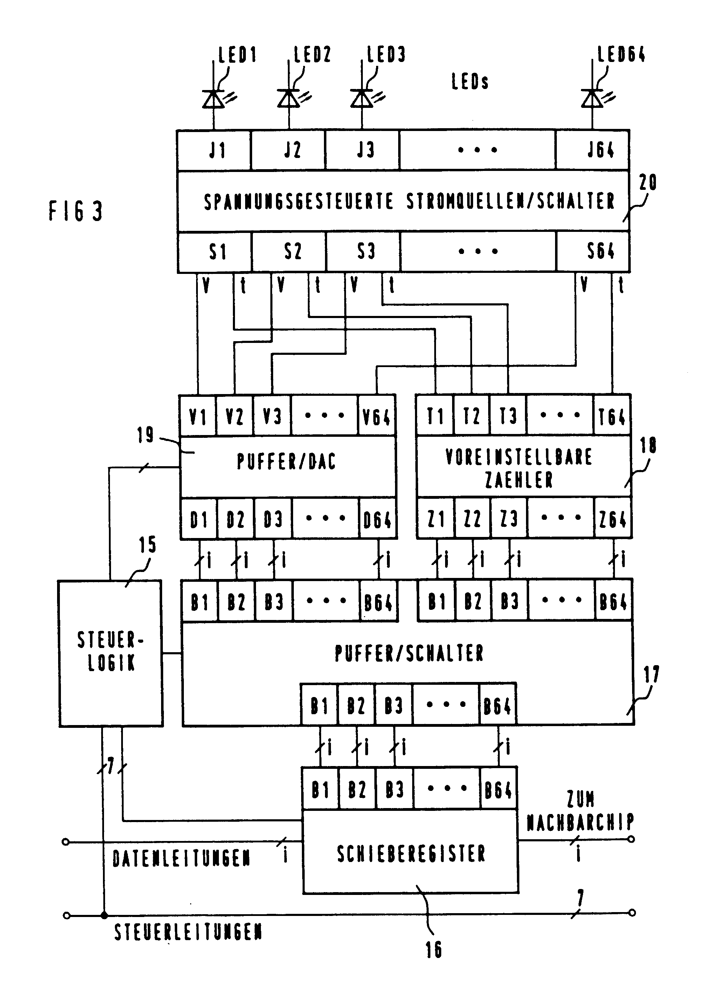

Der Aufbau der IC-B-Schaltkreise 14/1 bis 14/n ist aus der Figur 3 ersichtlich. Sie werden über eine mikroprozessorgesteuerte Steuerlogik 15 des Druckkopfcontrollers 12 angesteuert und enthalten jeweils ein Schieberegister 16 mit 64 Speicherplätzen entsprechend der Anzahl der LED's je LED-Gruppe. Weiterhin 64 Puffer mit Schalteinrichtungen 17; 64 voreinstellbare Zähler 18 und 64 Digital-Analogumsetzer mit zugehörigen Puffern 19. Zur Ansteuerung der 64 LED's sind spannungsgesteuerte Stromquellen mit zugehörigen Schalteinrichtungen 20 vorgesehen.

Die IC-B-Schaltkreise arbeiten in zwei Phasen, nämlich in einer Anlaufphase (Upload) und in einer Druckphase In der Anlaufphase erhält der Druckkopf LED-Abgleichinformationen, die eine nahezu gleiche Lichtabstrahlung aller LED ermöglichen, wobei die Toleranz der Lichtleistungsabstrahlung kleiner ± 3 % beträgt. Diese Abgleichsinformationen sind ebenfalls als Belichtungsbyts B1 bis B64 codiert. Sie können über eine Belichtungsenergiekorrektureinrichtung gewonnen werden, wie sie in der EP-B1-0 275 254 beschrieben ist. Um diesen Abgleich zu bewerkstelligen, werden vom Druckkopfcontroller 12 nacheinander die Abgleichbelichtungsbytes B1 - Bn für alle LED's in die Schieberegister 16 geschoben. Die Steuerlogik jedes IC-B-Schaltkreises 14/1 bis 14/n bewirkt danach in Verbindung mit den IC-B-Schaltern (Umschaltung Anlauf/Druckphase) die Übergabe der 64 Bytes B1 bis B64 an die Puffer 17, die die Abgleichwerte bis zum Ausschalten des Druckers oder bis zu einer erneuten Abarbeitung der Anlaufphase speichern. Die Puffer 17 steuern 64 Einzel-Digital-Analogumsetzer D1 - D64 des Umsetzers 19 an, die für jede LED ein spezielles Potential V1 bis V64 erzeugen, das den jeweiligen LED Strom und damit das Niveau der Belichtung bestimmt.

Auch zum Druck der Mikropixelzeilen werden zunächst die Belichtungsbytes B1 bis B64 für alle Bildpunkte in die IC-B-Schieberegister 16 geschoben. Danach werden sie gleichzeitig in allen IC-B-Schaltkreisen 14/1 bis 14/n an jeweils 64 voreinstellbare Einzel-Zähler Z1 - Z64 der Breite i eines Zählerblockes 18 übergeben, die den einzelnen LED's zugeordnet sind. Die Zähler 18 werden alle gemeinsam getaktet und heruntergezählt. Die Zeit zwischen zwei Takten wird durch einen Basiszeittakt bestimmt, der über die Steuerlogik 15 zugeführt wird. Damit wird in Abhängigkeit vom Zählerstand jedem der spannungsgesteuerten Stromquellen 20 über ihre Schalter S1 bis S64 eine Einschaltzeit T1 bis T64 zugeordnet. Beim Zählerstand ungleich Null fließt in der LED Strom. Beim Zählerstand Null wird er abgeschaltet. Der Zählvorgang bestimmt in der beschriebenen Weise die Emissionsdauer der LED1-LED64. Die Größen der einzelnen LED Ströme I1 bis I64 sind durch die in der Anlaufphase voreingestellten Potentiale V1 bis V64 des Analogumsetzers 19 festgelegt.

Die so erzeugte Belichtungsverteilung wird über eine hier nicht dargestellte Selfoc-Optik auf die Fotoleiteroberfläche F abgebildet.

Bei dem beschriebenen Ausführungsbeispiel wird der Fotoleiter F vor dem Belichtungsprozeß mit Hilfe der Ladeeinrichtung L aufgeladen und über die Belichtungseinrichtung DK entladen. Das gleiche Prinzip ist jedoch auch anwendbar auf elektrofotografische Prozesse, bei denen der entladene Fotoleiter mit Hilfe der Belichtungseinrichtung DK zeichenabhängig aufgeladen wird. Für die Belichtungseinrichtung DK kann der beschriebene LED-Kamm verwendet werden. Auch die Verwendung von anderen intensitätsabhängig steuerbaren Lichtquellen, wie Laserdioden usw. ist möglich.

## Patentansprüche

1. Anordnung zur Erzeugung von Rasterdruck hoher Qualität mittels einer elektrofotografischen Druckeinrichtung mit,
- einer als optischer Kamm ausgebildeten Lichtquelle (DK), die eine Vielzahl einzeln ansteuerbarer Lichtquellen (LED) enthält, sowie mit
- Lichtquellen-Steuermitteln (DC, DA) zur Steuerung der Belichtung, die mit den Lichtquellen (LED) gekoppelt sind, dadurch gekennzeichnet, daß die Steuermittel (DC, DA) enthalten:
- den Lichtquellen (LED) zugeordnete, die Lichtquellen (LED) betätigende Schaltelemente (20);
- eine mit den Schaltelementen (20) koppelbare taktgesteuerte Zähleinrichtung (18)
- einen mit der Zähleinrichtung (18) koppelbaren Speicher (16) zur Aufnahme von die Belichtung (H) jeder Lichtquelle (LED) kennzeichnenden Datenwörtern und
- eine Steuereinrichtung (15), die zur Ansteuerung der Lichtquellen (LED) Zählerstände der Zähleinrichtung (18) entsprechend den im Speicher (16) gespeicherten Datenwörtern voreinstellt und dann durch Takten der Zähleinrichtung (18) die Lichtquellen (LED) über die Schaltelemente (20) entsprechend den Zählerständen aktiviert.

2. Anordnung nach Anspruch 1 mit den Lichtquellen (LED) zugeordneten spannungsgesteuerten Stromquellen (20), die in Abhängigkeit von einem durch die Stromquellen (20) hervorgerufenen Erregerstrom (I) das Belichtungsniveau der Lichtquellen (LED) einstellen.

3. Anordnung nach einem der Ansprüche 1 oder 2 mit
- einer mit dem Speicher (16) koppelbaren weiteren Speichereinrichtung (17) zur Aufnahme von Lichtquellenabgleichinformationen zugeordneten Datenwörtern und
- einer mit den spannungsgesteuerten Stromquellen (20) und der weiteren Speichereinrichtung (17) koppelbaren spannungserzeugenden Einrichtung (19), die in Abhängigkeit von den Datenwörtern Ansteuerspannungen (V) für die Stromquellen (20) generiert.

## Claims

1. An arrangement for generating matrix print of high quality by means of an electrophotographic printing equipment having
- a light source (DK) formed as an optical comb, said light source (DK) including a multiplicity of individually drivable light sources (LED), as well as having
- light source control means (DC, DA), coupled to the light sources (LED), for controlling the exposure, **characterized** in that the control means (DC, DA) comprise:
- switching elements (20) assigned to the light sources (LED) and actuating the light sources (LED);
- a clock-controlled counting equipment (18) which can be coupled to the switching elements (20)
- a memory (16), which can be coupled to the counting equipment (18), for receiving data words characterizing the exposure (H) of each light source (LED) and
- a control equipment (15) which, for driving the light sources (LED) , presets counter states of the counting equipment (18) in accordance with the data words stored in the memory (16) and then, by clocking the counting equipment (18), activates the light sources (LED) via the switching elements (20) in accordance with the counter states.

2. An arrangement according to claim 1 having voltage-controlled current sources (20) which are assigned to the light sources (LED) and which set the exposure level of the light sources (LED) as a function of an excitation current (I) caused by the current sources (20).

3. An arrangement according to any one of the claims 1 or 2 having
- a further memory equipment (17), which can be coupled to the memory (16) for receiving data words assigned to light source equalizing information and
- a voltage-generating equipment (19) which can be coupled to the voltage-controlled current sources (20) and the further memory equipment (17) and which generates drive voltages (V) for the current sources (20) as a function of the data words.

## Revendications

1. Dispositif pour la production d'une impression tramée de haute qualité au moyen d'un dispositif d'impression électrophotographique comprenant :
- une source lumineuse (DK) constituée par un peigne optique, qui contient une pluralité de sources lumineuses (LED) pouvant être commandées individuellement, ainsi que
- des moyens (DC, DA) de commande des sources lumineuses destinés à commander la production de lumière, qui sont connectés aux sources lumineuses (LED),
caractérisé en ce que les moyens de commande (DC, DA) comprennent :
- des éléments de commutation (20) associés aux sources lumineuses (LED), qui actionnent les sources lumineuses (LED) ;
- un dispositif de comptage (18) commandé cycliquement, pouvant être connecté aux éléments de commutation (20) ;
- une mémoire (16) pouvant être connectée au dispositif de comptage (18), pour recevoir des mots de données caractérisant la production de lumière (H) de chaque source lumineuse (LED) ; et
- un dispositif de commande (15) qui préétablit des états de compteur du dispositif de comptage (18) pour la commande des sources lumineuses (LED) en fonction des mots de données mémorisés dans la mémoire (16) et qui, ensuite, par activation cyclique du dispositif de comptage (18), active les sources lumineuses (LED) par l'intermédiaire des éléments de commutation (20), en fonction des états de compteur.

2. Dispositif selon la revendication 1, comprenant des sources de courant (20) commandées en tension, associées aux sources lumineuses (LED) et qui, en fonction d'un courant d'excitation (I) engendré par les sources de courant (20) règlent le niveau de production de lumière des sources lumineuses (LED).

3. Dispositif selon une des revendications 1 et 2, comprenant :
- un dispositif de mémoire additionnel (17) pouvant être connecté à la mémoire (16), pour recevoir des mots de données associés à des informations d'égalisation des sources lumineuses, et
- un dispositif (19) producteur de tension, pouvant être connecté aux sources de courant (20) commandées en tension et au dispositif de mémoire additionnel (17), et qui génère des tensions de commande (V) pour les sources de courant (20) en fonction des mots de données.
